# EUROPEAN PATENT SPECIFICATION

(11) **EP 2 355 071 B1**
(45) Date of publication and mention of the grant of the patent: **19.12.2012**
(21) Application number: 11152798.2
(22) Date of filing: 31.01.2011
(51) Int. Cl.: G08G 5/06, G08G 5/00, G01C 23/00

(54) **Methods for rendering taxiway and runway signage in a synthetic display of an airport field**
Verfahren zur Darstellung von Rollbahn- und Pistenbeschilderung auf einem Flughafengelände in einer synthetischen Anzeige
Procédés de rendu de signalisation de voies de circulation et pistes dans un affichage synthétique d'un aéroport

(30) Priority: 09.02.2010 US 702950
(43) Date of publication of application: 10.08.2011
(73) Proprietor: Honeywell International Inc., Morristown, NJ 07962 (US)
(72) Inventor: Feyereisen, Thea L., Morristown, NJ 07962-2245 (US); Nichols, Troy, Morristown, NJ 07962-2245 (US); Suddreth, John G., Morristown, NJ 07962-2245 (US); Wyatt, Ivan Sandy, Morristown, NJ 07962-2245 (US); Engels, Jay, Morristown, NJ 07962-2245 (US); He, Gang, Morristown, NJ 07962-2245 (US)
(74) Representative: Buckley, Guy Julian

(56) References cited:
- EP-A1- 2 048 638
- EP-A1- 2 149 783
- US-A1- 2008 306 691
- US-B1- 7 342 514
- US-B2- 6 731 226

## Description

Embodiments of the subject matter described herein relate generally to avionics systems such as flight display systems. More particularly, embodiments of the subject matter relate to a flight deck display system that generates a synthetic display of an airport field that includes graphical representations of taxiway/runway signage.

### BACKGROUND

Modern flight deck displays for vehicles (such as aircraft or spacecraft) display a considerable amount of information, such as vehicle position, speed, altitude, attitude, navigation, target, and terrain information. In the case of an aircraft, most modern displays additionally display a flight plan from different views, either a lateral view, a vertical view, or a perspective view, which can be displayed individually or simultaneously on the same display. Synthetic vision or simulated displays for aircraft applications are also being considered for certain scenarios, such as low visibility conditions. The primary perspective view used in synthetic vision systems emulates a forward-looking cockpit viewpoint. Such a view is intuitive and provides helpful visual information to the pilot and crew, especially during airport approaches and taxiing. In this regard, synthetic display systems for aircraft are beginning to employ realistic simulations of airports that include details such as runways, taxiways, buildings, etc. Moreover, many synthetic vision systems attempt to reproduce the real-world appearance of an airport field, including items such as light fixtures, taxiway signs, and runway signs.

US 7342514 discloses a head-up display for an aircraft comprising a projector for displaying airport runway and taxiway symbols. US 6731226 discloses an airport feature display system providing visual guidance cues and awareness to track a specified taxi path on a head up display. EP 2048638 discloses a method for providing awareness of a vehicle's location and heading including presenting a predetermined symbol on a map representing the vehicle.

### BRIEF SUMMARY

The present invention in its various aspects is as set out in the appended claims. An exemplary embodiment of a method for displaying airport field features on a flight deck display element of an aircraft is provided. The method obtains geographic position data and heading data for the aircraft, accesses airport feature data associated with synthetic graphical representations of an airport field, and renders a dynamic synthetic display of the airport field on the flight deck display element. The dynamic synthetic display is rendered in accordance with the geographic position data, the heading data, and the airport feature data. The dynamic synthetic display comprises graphical representations of: a taxiway having an exposed taxiway surface; and taxiway/runway signage conformally rendered on the exposed taxiway surface in a stationary location relative to the taxiway.

Also provided is an exemplary embodiment of a flight deck display system for an aircraft. The system includes a source of geographic position and heading data for the aircraft, a source of airport feature data associated with synthetic graphical representations of an airport field, and a processor architecture operatively coupled to the source of geographic position and heading data and to the source of airport feature data. The processor architecture is configured to process the geographic position and heading data, process the airport feature data, and, based upon the geographic position and heading data and the airport feature data, generate image rendering display commands. The flight deck display system also includes a display that receives the image rendering display commands and, in response thereto, renders a synthetic representation of the airport field that comprises conformal graphical representations of taxiways, runways, and signage rendered on the taxiways.

Another exemplary embodiment of a method for displaying airport field features on a flight deck display element of an aircraft is provided. This method involves obtaining geographic position data and heading data for the aircraft, accessing airport feature data associated with synthetic graphical representations of an airport field, and rendering a dynamic synthetic display of the airport field on the flight deck display element. The dynamic synthetic display is rendered in accordance with the geographic position data, the heading data, and the airport feature data, and the dynamic synthetic display includes graphical representations of: a plurality of taxiways conformally rendered in accordance with a plurality of real-world counterpart taxiways; and taxiway signage including taxiway identifiers for the plurality of taxiways. Certain display characteristics of the taxiway signage are influenced by actual physical and/or temporal proximity of the aircraft relative to the real-world counterpart taxiways.

Another exemplary embodiment of a flight deck display system for an aircraft is also provided. The system includes a source of geographic position and heading data for the aircraft, a source of airport feature data associated with synthetic graphical representations of an airport field, and a processor architecture operatively coupled to the source of geographic position and heading data and to the source of airport feature data. The processor architecture is configured to process the geographic position and heading data, process the airport feature data, and, based upon the geographic position and heading data and the airport feature data, generate image rendering display commands. The flight deck display system also includes a display that receives the image rendering display commands and, in response thereto, renders a synthetic representation of the airport field that comprises graphical representations of taxiways and corresponding taxiway signage. The graphical representations of taxiways are conformally rendered in accordance with a plurality of real-world counterpart taxiways, and the graphical representations of taxiway signage include taxiway identifiers for the plurality of taxiways. Moreover, display characteristics of the graphical representations of taxiway signage are influenced by actual physical and/or temporal proximity of the aircraft relative to the real-world counterpart taxiways.

Also provided is yet another exemplary embodiment of a method of displaying airport field features on a flight deck display element of an aircraft. This method begins by obtaining geographic position data and heading data for the aircraft. This method continues by accessing airport feature data associated with synthetic graphical representations of an airport field, and rendering a dynamic synthetic display of the airport field on the flight deck display element. The dynamic synthetic display is rendered in accordance with the geographic position data, the heading data, and the airport feature data. The dynamic synthetic display includes graphical representations of: a taxiway; and a taxiway sign that includes an identifier of the taxiway and a dynamic directional indicator corresponding to an intended direction of travel for the aircraft on the taxiway. The orientation of the dynamic directional indicator changes as a function of the geographic position and heading data.

Also provided is yet another exemplary embodiment of a flight deck display system for an aircraft. This system includes: a source of geographic position and heading data for the aircraft; a source of airport feature data associated with synthetic graphical representations of an airport field; a processor architecture operatively coupled to the source of geographic position and heading data and to the source of airport feature data, the processor architecture being configured to process the geographic position and heading data, process the airport feature data, and, based upon the geographic position and heading data and the airport feature data, generate image rendering display commands; and a display that receives the image rendering display commands and, in response thereto, renders a synthetic representation of the airport field that comprises graphical representations of a taxiway and a taxiway sign, the graphical representation of the taxiway sign including an identifier of the taxiway and a dynamic directional indicator corresponding to an intended direction of travel for the aircraft on the taxiway, wherein heading of the dynamic directional indicator changes as a function of the geographic position and heading data.

Another exemplary embodiment of a method for displaying airport field features on a flight deck display element of an aircraft is also provided. This method obtains geographic position data and heading data for the aircraft, accesses airport feature data associated with synthetic graphical representations of an airport field, and renders a dynamic synthetic display of the airport field on the flight deck display element. The dynamic synthetic display is rendered in accordance with the geographic position data, the heading data, and the airport feature data. The dynamic synthetic display includes graphical representations of: a taxiway; and a dynamic taxiway sign that includes an identifier of the taxiway, wherein the dynamic taxiway sign is rendered such that it is always facing forward on the flight deck display element.

Another exemplary embodiment of a flight deck display system for an aircraft is also provided. This system includes a source of geographic position and heading data for the aircraft, a source of airport feature data associated with synthetic graphical representations of an airport field, and a processor architecture operatively coupled to the source of geographic position and heading data and to the source of airport feature data. The processor architecture processes the geographic position and heading data, processes the airport feature data, and, based upon the geographic position and heading data and the airport feature data, generates image rendering display commands. A display receives the image rendering display commands and, in response thereto, renders a synthetic representation of the airport field that comprises graphical representations of a taxiway and a dynamic taxiway sign, the graphical representation of the dynamic taxiway sign including an identifier of the taxiway. The dynamic taxiway sign is rendered in an always-forward-facing manner.

This summary is provided to introduce a selection of concepts in a simplified form that are further described below in the detailed description. This summary is not intended to identify key features or essential features of the claimed subject matter, nor is it intended to be used as an aid in determining the scope of the claimed subject matter.

### BRIEF DESCRIPTION OF THE DRAWINGS

A more complete understanding of the subject matter may be derived by referring to the detailed description and claims when considered in conjunction with the following figures, wherein like reference numbers refer to similar elements throughout the figures.

FIG. 1 is a schematic representation of an embodiment of a flight deck display system;

FIG. 2 is a flow chart that illustrates an exemplary embodiment of a dynamic synthetic display rendering process;

FIGS. 3-4 are graphical representations of a synthetic display having rendered thereon an airport field and related taxiway/runway signage;

FIG. 5 is a flow chart that illustrates an exemplary embodiment of a variable display characteristics process; and

FIG. 6 is a graphical representation of a synthetic display having rendered thereon an airport field and related taxiway/runway signage.

### DETAILED DESCRIPTION

The following detailed description is merely illustrative in nature and is not intended to limit the embodiments of the subject matter or the application and uses of such embodiments. As used herein, the word "exemplary" means "serving as an example, instance, or illustration." Any implementation described herein as exemplary is not necessarily to be construed as preferred or advantageous over other implementations. Furthermore, there is no intention to be bound by any expressed or implied theory presented in the preceding technical field, background, brief summary or the following detailed description.

Techniques and technologies may be described herein in terms of functional and/or logical block components, and with reference to symbolic representations of operations, processing tasks, and functions that may be performed by various computing components or devices. Such operations, tasks, and functions are sometimes referred to as being computer-executed, computerized, software-implemented, or computer-implemented. In practice, one or more processor devices can carry out the described operations, tasks, and functions by manipulating electrical signals representing data bits at memory locations in the system memory, as well as other processing of signals. The memory locations where data bits are maintained are physical locations that have particular electrical, magnetic, optical, or organic properties corresponding to the data bits. It should be appreciated that the various block components shown in the figures may be realized by any number of hardware, software, and/or firmware components configured to perform the specified functions. For example, an embodiment of a system or a component may employ various integrated circuit components, e.g., memory elements, digital signal processing elements, logic elements, look-up tables, or the like, which may carry out a variety of functions under the control of one or more microprocessors or other control devices.

The system and methods described herein can be deployed with any vehicle, including aircraft, automobiles, spacecraft, watercraft, and the like. The preferred embodiments of the system and methods described herein represent an intelligent way to present visual airport information to a pilot or flight crew during operation of the aircraft and, in particular embodiments, during taxi maneuvers. In this regard, navigation of airport fields (which typically include taxiways, runways, and junctions or intersections thereof) can be as difficult and challenging as the actual airborne portion of flights. Traditionally, pilots have relied upon paper charts to increase their knowledge of the airport layout, to understand where the aircraft is positioned relative to the airport surface features, and to prepare for upcoming turns and taxi maneuvers. Electronic flight bags and electronic chart readers have recently found their way into aircraft cockpits. These electronic systems often include an ownship reference along with a scanned chart of the airport field. However, the displays of these systems are usually monochromatic and, accordingly, no prominence is given to displayed items such as runways or other important airport features. Three-dimensional visualizations of the airport scene generated by conventional systems frequently attempt to precisely duplicate and replicate the external scene in a graphical manner. However, the external real-world scene itself may contain many visual elements and it may be confusing or overwhelming due to the presence of taxiway signage, runway signage, light fixtures, and other physical structures that are located off the shoulder of the taxiways/runways. In reality, these signs and fixtures must be located off the shoulder so that they do not obstruct the actual taxiways/runways. Accordingly, real-world taxiway/runway signage usually include arrows and other labels or indicators that are intended to link each sign with its actual corresponding taxiway/runway.

An exemplary embodiment of a flight deck display system described herein generates a synthetic graphical representation of an airport field with taxiways, runways, or both. The synthetic graphical representation includes taxiway/runway signage that is rendered in a way that need not replicate the actual positioning of the real-world counterpart signage. Rather, the graphical representations of the taxiway/runway signage may be rendered flat on the depicted surface of the respective taxiways, and the taxiway/runway signage may be rendered in a conformal manner. In addition to the flat taxiway/runway signage, the exemplary embodiment of the flight deck display system can render upcoming turns or other maneuvers that have been cleared by air traffic control in a flat and conformal manner.

As mentioned previously, a real-world taxiway sign on an airport field often includes an identifier or label of the particular taxiway, along with an arrow or pointer that is oriented toward the particular taxiway. The arrows are used because the actual taxiway signs are positioned off the shoulder of the actual taxiways. In reality, taxiway/runway signs and their associated arrows can be difficult to see and interpret from a distance and, therefore, it can be difficult for crew members to associate distant signs with their corresponding taxiways or runways. Moreover, it may not even be necessary for crew members to immediately know the identity of taxiways and runways that are far in the distance. Consequently, a synthetic graphical representation of the airport field that tries to emulate the actual field of view might contain superfluous visual information that might be confusing, distracting, or difficult to interpret. In other words, graphical representations of distant signage may represent annoying visual display clutter that serves little to no practical purpose.

An exemplary embodiment of a flight deck display system addresses this issue of display clutter by rendering taxiway/runway signage in an incremental manner, in a progressive manner, or otherwise using visually distinguishable characteristics that are dependent upon the physical or temporal proximity of the aircraft to the airport feature of interest (e.g., proximity to a given taxiway, proximity to a taxiway intersection, proximity to an upcoming turning point, or the like). For example, signage that is far in the distance need not be displayed at all, or it may be displayed in an inconspicuous manner, while signage that is within close proximity to the aircraft can be displayed in a prominent manner. Moreover, signage can be classified as either "tactical" or "strategic," where tactical signs are those within close proximity to the aircraft and/or those that correspond to immediately approaching decision points or intersections, and where strategic signs are those located far away from the aircraft and/or those that are not deemed to be tactical signs. The exemplary embodiment described here graphically renders tactical signs using one set of visually distinguishable characteristics and/or in a certain layout or position, and graphically renders strategic signs using a different set of visually distinguishable characteristics and/or in a different layout or pattern.

An exemplary embodiment of a flight deck display system utilizes dynamically rendered arrows (or other directional indicators) that are associated with taxiway/runway signage. These dynamically rendered arrows provide the crew members with a good visual association between the graphically rendered signage and the respective taxiways/runways. In this regard, taxiway/runway signage can be graphically rendered in the middle of a taxiway, and an arrow can be graphically rendered on or under the signage. Unlike its real-world counterpart sign, which might have a pointer in a fixed location and orientation, the graphical representation of the arrow dynamically shifts (e.g., rotates) in response to changes in the aircraft position and heading, such that the synthetic display provides an intuitive and easy to read indication of which taxiway or runway is associated with the graphically depicted sign.

In reality, airport signage is located to the side of runways and taxiways, and the signage is fixed in place. Thus, it may be difficult to read the front surface of a sign if the aircraft is not actually approaching the sign directly head-on. If a synthetic graphical representation of an airport field precisely replicates fixed signage, then the same viewing difficulty arises. An exemplary embodiment of a flight deck display system addresses this problem by actively and dynamically rotating the graphical representations of taxiway/runway signage such that the displayed signs are always forward-facing. In other words, the signage is rendered such that the front surface is always visible to the flight crew. Thus, the orientation of the rendered signage will vary as a function of the position and heading of the aircraft.

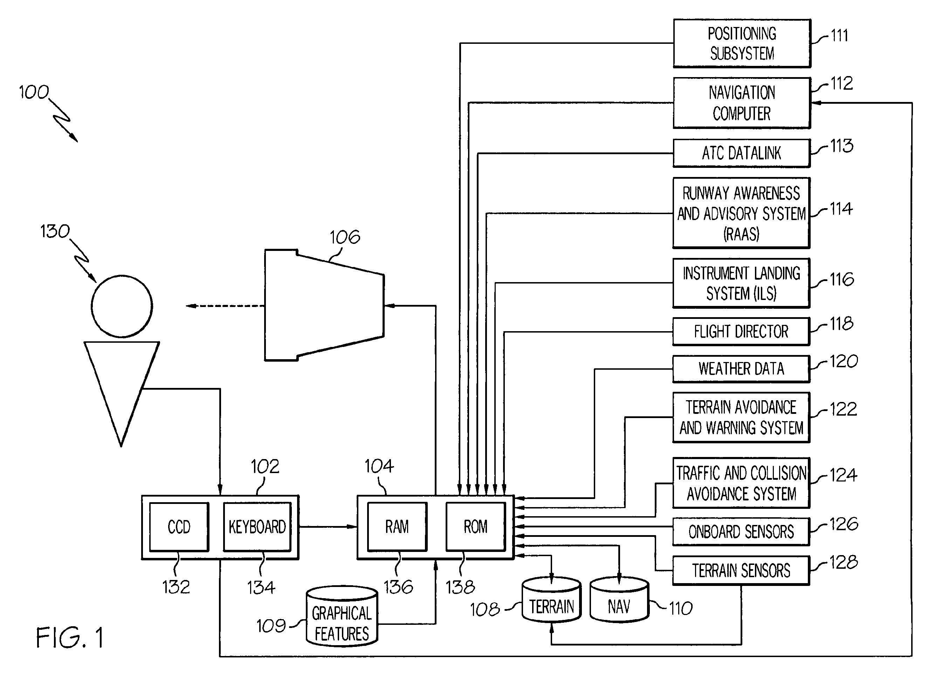

Turning now to the drawings, FIG. 1 depicts an exemplary flight deck display system 100 (suitable for a vehicle such as an aircraft) that generally includes, without limitation: a user interface 102; a processor architecture 104 coupled to the user interface 102; and a display element 106 coupled to the processor architecture 104. The system 100 may also include, cooperate with, and/or communicate with a number of databases, sources of data, or the like. Moreover, the system 100 may include, cooperate with, and/or communicate with a number of external subsystems as described in more detail below. For example, the processor architecture 104 may cooperate with one or more of the following components, features, data sources, and subsystems, without limitation: one or more terrain databases 108; one or more graphical features databases 109; one or more navigation databases 110; a positioning subsystem 111; a navigation computer 112; an air traffic control (ATC) datalink subsystem 113; a runway awareness and advisory system (RAAS) 114; an instrument landing system (ILS) 116; a flight director 118; a source of weather data 120; a terrain avoidance and warning system (TAWS) 122; a traffic and collision avoidance system (TCAS) 124; one or more onboard sensors 126; and one or more terrain sensors 128.

The user interface 102 is in operable communication with the processor architecture 104 and is configured to receive input from a user 130 (e.g., a pilot) and, in response to the user input, supply command signals to the processor architecture 104. The user interface 102 may be any one, or combination, of various known user interface devices including, but not limited to, a cursor control device (CCD) 132, such as a mouse, a trackball, or joystick, one or more buttons, switches, or knobs. In the depicted embodiment, the user interface 102 includes the CCD 132 and a keyboard 134. The user 130 manipulates the CCD 132 to, among other things, move cursor symbols that might be rendered at various times on the display element 106, and the user 130 may manipulate the keyboard 134 to, among other things, input textual data. As depicted in FIG. 1, the user interface 102 may also be utilized to enable user interaction with the navigation computer 112, the flight management system, and/or other features and components of the aircraft.

The processor architecture 104 may utilize one or more known general-purpose microprocessors or an application specific processor that operates in response to program instructions. In the depicted embodiment, the processor architecture 104 includes or communicates with onboard RAM (random access memory) 136, and onboard ROM (read only memory) 138. The program instructions that control the processor architecture 104 may be stored in either or both the RAM 136 and the ROM 138. For example, the operating system software may be stored in the ROM 138, whereas various operating mode software routines and various operational parameters may be stored in the RAM 136. It will be appreciated that this is merely exemplary of one scheme for storing operating system software and software routines, and that various other storage schemes may be implemented. It will also be appreciated that the processor architecture 104 may be implemented using various other circuits, not just a programmable processor. For example, digital logic circuits and analog signal processing circuits could also be used.

The processor architecture 104 is in operable communication with the terrain database 108, the graphical features database 109, the navigation database 110, and the display element 106, and is coupled to receive various types of data, information, commands, signals, etc., from the various sensors, data sources, instruments, and subsystems described herein. For example, the processor architecture 104 may be suitably configured to obtain and process real-time aircraft status data (e.g., avionics-related data) as needed to generate a graphical synthetic perspective representation of terrain in a primary display region. The aircraft status or flight data may also be utilized to influence the manner in which graphical features (associated with the data maintained in the graphical features database 109) of a location of interest such as an airport are rendered during operation of the aircraft. For the exemplary embodiments described here, the graphical features database 109 may be considered to be a source of airport feature data that is associated with synthetic graphical representations of one or more airport fields.

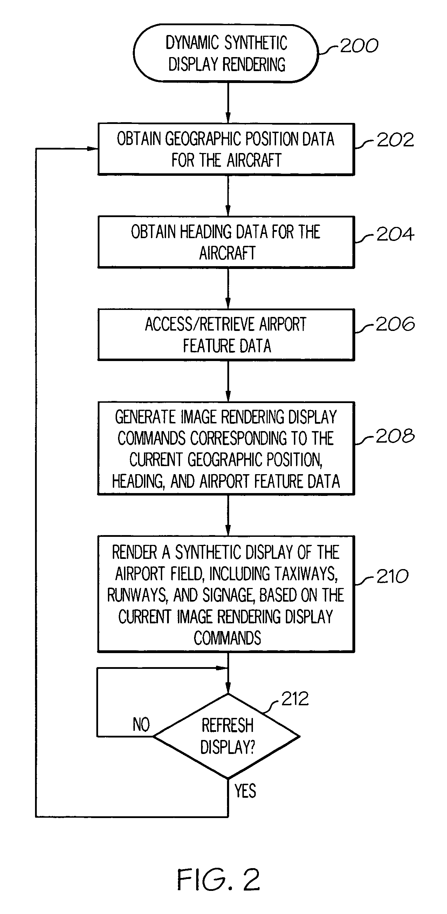

For this embodiment, the graphical features database 109 is an onboard database that contains pre-loaded airport feature data. In alternate embodiments, some or all of the airport feature data can be loaded into the graphical features database 109 during flight. Indeed, some airport feature data could be received by the aircraft in a dynamic manner as needed. The airport feature data accessed by the processor architecture 104 is indicative of displayable visual features of one or more airports of interest. In practice, the airport feature data can be associated with any viewable portion, aspect, marking, structure, building, geography, and/or landscaping located at, on, in, or near an airport. The processing and rendering of the airport feature data will be described in more detail below with reference to FIGS. 2-6.

Depending upon the particular airport field, the airport feature data could be related to any of the following visually distinct features, without limitation: a runway; runway markings and vertical signage; a taxiway; taxiway markings and vertical signage; a ramp area and related markings; parking guidance lines and parking stand lines; a terminal or concourse; an air traffic control tower; a building located at or near the airport; a landscape feature located at or near the airport; a structure located at or near the airport; a fence; a wall; a vehicle located at or near the airport; another aircraft located at or near the airport; a light pole located at or near the airport; a power line located at or near the airport; a telephone pole located at or near the airport; an antenna located at or near the airport; construction equipment, such as a crane, located at or near the airport; a construction area located at or near the airport; trees or structures or buildings located around the airport perimeter; and bodies of water located in or around the airport. More particularly, runway-specific feature data could be related to, or indicate, without limitation: arresting gear location; blast pad; closed runway; land and hold short operation locations; rollout lighting; runway centerlines; runway displaced thresholds; runway edges; runway elevation; runway end elevation; runway exit lines; runway heading; runway hold short lines; runway hotspots; runway intersection; runway labels; runway landing length; runway length; runway lighting; runway markings; runway overrun; runway shoulder; runway slope; runway stopways; runway surface information; runway that ownship is approaching; runway threshold; runway weight bearing capacity; and runway width. Taxiway-specific feature data could be related to, or indicate, without limitation: clearway; closed taxiway; ILS critical areas; ILS hold lines; low visibility tax route; preferred taxiway; SMGS taxiways; taxiway direction indicator labels; taxiway high speed; taxiway intersection labels; taxiway bearing strength (when less than associated runway); taxiway centerlines; taxiway edges or boundaries; taxiway exit; taxiway guidance lines; taxiway hold short lines; taxiway hotspot; taxiway labels; taxiway shoulder; and taxiway width. Geographical features conveyed by or in the airport feature data could be related to, or indicate, without limitation: air traffic control boundaries; airport beacons (vertical point object); airport name; airport notes; airport reference point; airport surface lighting; airport terrain features; aprons; areas under construction; building identification; buildings; control tower; deicing areas; FBO; fire station; frequency areas; grassy areas; hangars; helicopter final approach and take off areas; helicopter landing pads; helicopter touchdown or liftoff areas; helipad thresholds; holding pens; latitude/longitude; magnetic variation; non-movement areas; north indication; on airport navaids; parking stand area; parking stand line; parking stand locations; penalty box; pole line; railroads; ramp areas; restricted areas; roads; service roads; spot elevations; stand guidance lines; survey control points; terminal buildings; trees; vertical line structures; vertical point structures; vertical polygonal structures; water features; wind cone; and wind sock.

In certain embodiments, the processor architecture 104 is configured to respond to inertial data obtained by the onboard sensors 126 to selectively retrieve terrain data from the terrain database 108 or the terrain sensor 128, to selectively retrieve navigation data from the navigation database 110, and/or to selectively retrieve graphical features data from the graphical features database 109, where the graphical features data corresponds to the location or target of interest. The processor architecture 104 can also supply appropriate display commands (e.g., image rendering display commands) to the display element 106, so that the retrieved terrain, navigation, and graphical features data are appropriately displayed on the display element 106. The processor architecture 104 may be further configured to receive real-time (or virtually real-time) airspeed, altitude, attitude, waypoint, and/or geographic position data for the aircraft and, based upon that data, generate image rendering display commands associated with the display of terrain.

The display element 106 is used to display various images and data, in both a graphical and a textual format, and to supply visual feedback to the user 130 in response to the user input commands supplied by the user 130 to the user interface 102. It will be appreciated that the display element 106 may be any one of numerous known displays suitable for rendering image and/or text data in a format viewable by the user 130. Nonlimiting examples of such displays include various cathode ray tube (CRT) displays, and various flat panel displays such as, various types of LCD (liquid crystal display), OLED, and TFT (thin film transistor) displays. The display element 106 may additionally be based on a panel mounted display, a HUD projection, or any known technology. In an exemplary embodiment, the display element 106 includes a panel display, and the display element 106 is suitably configured to receive image rendering display commands from the processor architecture 104 and, in response thereto, the display element 106 renders a synthetic graphical display having a perspective view corresponding to a flight deck viewpoint. In certain situations, the display element 106 receives appropriate image rendering display commands and, in response thereto, renders a synthetic representation of an airport field. The graphically rendered airport field might include conformal graphical representations of taxiways, runways, and signage rendered on the taxiways. To provide a more complete description of the operating method that is implemented by the flight deck display system 100, a general description of exemplary displays and various graphical features rendered thereon will be provided below with reference to FIGS. 2-6.

As FIG. 1 shows, the processor architecture 104 is in operable communication with the source of weather data 120, the TAWS 122, and the TCAS 124, and is additionally configured to generate, format, and supply appropriate display commands to the display element 106 so that the avionics data, the weather data 120, data from the TAWS 122, data from the TCAS 124, and data from the previously mentioned external systems may also be selectively rendered in graphical form on the display element 106. The data from the TCAS 124 can include Automatic Dependent Surveillance Broadcast (ADS-B) messages.

The terrain database 108 includes various types of data, including elevation data, representative of the terrain over which the aircraft is flying. The terrain data can be used to generate a three dimensional perspective view of terrain in a manner that appears conformal to the earth. In other words, the display emulates a realistic view of the terrain from the flight deck or cockpit perspective. The data in the terrain database 108 can be pre-loaded by external data sources or provided in real-time by the terrain sensor 128. The terrain sensor 128 provides real-time terrain data to the processor architecture 104 and/or the terrain database 108. In one embodiment, terrain data from the terrain sensor 128 is used to populate all or part of the terrain database 108, while in another embodiment, the terrain sensor 128 provides information directly, or through components other than the terrain database 108, to the processor architecture 104.

In another embodiment, the terrain sensor 128 can include visible, low-light TV, infrared, lidar, or radar-type sensors that collect and/or process terrain data. For example, the terrain sensor 128 can be a radar sensor that transmits radar pulses and receives reflected echoes, which can be amplified to generate a radar signal. The radar signals can then be processed to generate three-dimensional orthogonal coordinate information having a horizontal coordinate, vertical coordinate, and depth or elevation coordinate. The coordinate information can be stored in the terrain database 108 or processed for display on the display element 106.

In one embodiment, the terrain data provided to the processor architecture 104 is a combination of data from the terrain database 108 and the terrain sensor 128. For example, the processor architecture 104 can be programmed to retrieve certain types of terrain data from the terrain database 108 and other certain types of terrain data from the terrain sensor 128. In one embodiment, terrain data retrieved from the terrain sensor 128 can include moveable terrain, such as mobile buildings and systems. This type of terrain data is better suited for the terrain sensor 128 to provide the most up-to-date data available. For example, types of information such as waterbody information and geopolitical boundaries can be provided by the terrain database 108. When the terrain sensor 128 detects, for example, a waterbody, the existence of such can be confirmed by the terrain database 108 and rendered in a particular color such as blue by the processor architecture 104.

The navigation database 110 includes various types of navigation-related data stored therein. In preferred embodiments, the navigation database 110 is an onboard database that is carried by the aircraft. The navigation-related data include various flight plan related data such as, for example, and without limitation: waypoint location data for geographical waypoints; distances between waypoints; track between waypoints; data related to different airports; navigational aids; obstructions; special use airspace; political boundaries; communication frequencies; and aircraft approach information. In one embodiment, combinations of navigation-related data and terrain data can be displayed. For example, terrain data gathered by the terrain sensor 128 and/or the terrain database 108 can be displayed with navigation data such as waypoints, airports, etc. from the navigation database 110, superimposed thereon.

Although the terrain database 108, the graphical features database 109, and the navigation database 110 are, for clarity and convenience, shown as being stored separate from the processor architecture 104, all or portions of these databases 108, 109, 110 could be loaded into the onboard RAM 136, stored in the ROM 138, or integrally formed as part of the processor architecture 104. The terrain database 108, the graphical features database 109, and the navigation database 110 could also be part of a device or system that is physically separate from the system 100.

The positioning subsystem 111 is suitably configured to obtain geographic position data for the aircraft. In this regard, the positioning subsystem 111 may be considered to be a source of geographic position data for the aircraft. In practice, the positioning subsystem 111 monitors the current geographic position of the aircraft in real-time, and the real-time geographic position data can be used by one or more other subsystems, processing modules, or equipment on the aircraft (e.g., the navigation computer 112, the RAAS 114, the ILS 116, the flight director 118, the TAWS 122, or the TCAS 124). In certain embodiments, the positioning subsystem 111 is realized using global positioning system (GPS) technologies that are commonly deployed in avionics applications. Thus, the geographic position data obtained by the positioning subsystem 111 may represent the latitude and longitude of the aircraft in an ongoing and continuously updated manner.

The avionics data that is supplied from the onboard sensors 126 includes data representative of the state of the aircraft such as, for example, aircraft speed, altitude, attitude (i.e., pitch and roll), heading, groundspeed, turn rate, etc. In this regard, one or more of the onboard sensors 126 may be considered to be a source of heading data for the aircraft. The onboard sensors 126 can include MEMS-based, ADHRS-related, or any other type of inertial sensor. As understood by those familiar with avionics instruments, the aircraft status data is preferably updated in a continuous and ongoing manner.

The weather data 120 supplied to the processor architecture 104 is representative of at least the location and type of various weather cells. The data supplied from the TCAS 124 includes data representative of other aircraft in the vicinity, which may include, for example, speed, direction, altitude, and altitude trend. In certain embodiments, the processor architecture 104, in response to the TCAS data, supplies appropriate display commands to the display element 106 such that a graphic representation of each aircraft in the vicinity is displayed on the display element 106. The TAWS 122 supplies data representative of the location of terrain that may be a threat to the aircraft. The processor architecture 104, in response to the TAWS data, preferably supplies appropriate display commands to the display element 106 such that the potential threat terrain is displayed in various colors depending on the level of threat. For example, red is used for warnings (immediate danger), yellow is used for cautions (possible danger), and green is used for terrain that is not a threat. It will be appreciated that these colors and number of threat levels are merely exemplary, and that other colors and different numbers of threat levels can be provided as a matter of choice.

As was previously alluded to, one or more other external systems (or subsystems) may also provide avionics-related data to the processor architecture 104 for display on the display element 106. In the depicted embodiment, these external systems include a flight director 118, an instrument landing system (ILS) 116, a runway awareness and advisory system (RAAS) 114, and a navigation computer 112. The flight director 118, as is generally known, supplies command data representative of commands for piloting the aircraft in response to flight crew entered data, or various inertial and avionics data received from external systems. The command data supplied by the flight director 118 may be supplied to the processor architecture 104 and displayed on the display element 106 for use by the user 130, or the data may be supplied to an autopilot (not illustrated). The autopilot, in turn, produces appropriate control signals that cause the aircraft to fly in accordance with the flight crew entered data, or the inertial and avionics data.

The ILS 116 is a radio navigation system that provides the aircraft with horizontal and vertical guidance just before and during landing and, at certain fixed points, indicates the distance to the reference point of landing. The system includes ground-based transmitters (not shown) that transmit radio frequency signals. The ILS 116 onboard the aircraft receives these signals and supplies appropriate data to the processor for display of, for example, an ILS feather (not shown in FIG. 1) on the display element 106. The ILS feather represents two signals, a localizer signal that is used to provide lateral guidance, and a glide slope signal that is used for vertical guidance.

The RAAS 114 provides improved situational awareness to help lower the probability of runway incursions by providing timely aural advisories to the flight crew during taxi, takeoff, final approach, landing and rollout. The RAAS 114 uses GPS data to determine aircraft position and compares aircraft position to airport location data stored in the navigation database 110 and/or in the graphical features database 109. Based on these comparisons, the RAAS 114, if necessary, issues appropriate aural advisories. Aural advisories, which may be issued by the RAAS 114, inform the user 130, among other things of when the aircraft is approaching a runway, either on the ground or from the air at times such as when the aircraft has entered and is aligned with a runway, when the runway is not long enough for the particular aircraft, the distance remaining to the end of the runway as the aircraft is landing or during a rejected takeoff, when the user 130 inadvertently begins to take off from a taxiway, and when an aircraft has been immobile on a runway for an extended time. During approach, data from sources such as GPS, including RNP and RNAV, can also be considered.

The navigation computer 112 is used, among other things, to allow the user 130 to program a flight plan from one destination to another. The navigation computer 112 may be in operable communication with the flight director 118. As was mentioned above, the flight director 118 may be used to automatically fly, or assist the user 130 in flying, the programmed route. The navigation computer 112 is in operable communication with various databases including, for example, the terrain database 108 and the navigation database 110. The processor architecture 104 may receive the programmed flight plan data from the navigation computer 112 and cause the programmed flight plan, or at least portions thereof, to be displayed on the display element 106.

The ATC datalink subsystem 113 is utilized to provide air traffic control data to the system 100, preferably in compliance with known standards and specifications. Using the ATC datalink subsystem 113, the processor architecture 104 can receive air traffic control data from ground based air traffic controller stations and equipment. In turn, the system 100 can utilize such air traffic control data as needed. For example, taxi maneuver clearance may be provided by an air traffic controller using the ATC datalink subsystem 113.

In operation, a flight deck display system as described herein is suitably configured to process the current real-time geographic position data, the current real-time heading data, the airport feature data, and possibly other data to generate image rendering display commands for the display element 106. Thus, the synthetic graphical representation of an airport field rendered by the flight deck display system will be based upon or otherwise influenced by at least the geographic position and heading data and the airport feature data.

FIG. 2 is a flow chart that illustrates an exemplary embodiment of a process 200 related to the rendering and display of a dynamic synthetic representation of an airport field. The various tasks performed in connection with the process 200 may be performed by software, hardware, firmware, or any combination thereof. For illustrative purposes, the following description of the process 200 may refer to elements mentioned above in connection with FIG. 1. In practice, portions of the process 200 may be performed by different elements of the described system, such as the processing architecture or the display element. It should be appreciated that the process 200 may include any number of additional or alternative tasks, the tasks shown in FIG. 2 need not be performed in the illustrated order, and the process 200 may be incorporated into a more comprehensive procedure or process having additional functionality not described in detail herein.

Although the process 200 could be performed or initiated at any time while the host aircraft is operating, this example assumes that the process 200 is performed after the aircraft has landed (or before takeoff). More specifically, the process 200 can be performed while the aircraft is in a taxi mode. The process 200 can be performed in a virtually continuous manner at a relatively high refresh rate. For example, iterations of the process 200 could be performed at a rate of 12-40 Hz (or higher) such that the synthetic flight deck display will be updated in real-time or substantially real time in a dynamic manner. In connection with the process 200, the flight deck display system may obtain geographic position data (task 202) and obtain heading data (task 204) for the aircraft. According to the invention the geographic position and heading data is obtained in real-time or virtually real-time such that it reflects the current state of the aircraft. The system may also access or retrieve airport feature data that is associated or otherwise indicative of synthetic graphical representations of the particular airport field (task 206). As explained above, the airport feature data might be maintained onboard the aircraft, and the airport feature data corresponds to, represents, or is indicative of certain visible and displayable features of the airport field of interest. The specific airport features data that will be used to render a given synthetic display will depend upon various factors, including the current geographic position and heading data of the aircraft.

The flight deck display system can process the geographic position data, the heading data, the airport feature data, and other data if necessary in a suitable manner to generate image rendering display commands corresponding to the desired state of the synthetic display (task 208). Accordingly, the image rendering display commands are based upon or otherwise influenced by the current geographic position and heading data such that the rendered synthetic display will emulate the actual real-world view from the flight deck perspective. The image rendering display commands are then used to control the rendering and display of the synthetic display (task 210) on the flight deck display element. For this example, task 210 renders a dynamic synthetic display of the airport field on the display element, and the airport field display will be rendered in accordance with the geographic position data, the heading data, and the airport feature data. As explained in more detail below, the graphical representation of the airport field might include graphical features corresponding to taxiways, runways, and taxiway/runway signage. The dynamic synthetic display may also include a synthetic perspective view of terrain near or on the airport field. In certain embodiments, the image rendering display commands may also be used to control the rendering of additional graphical features, such as flight instrumentation symbology, flight data symbology, or the like.

If it is time to refresh the display (query task 212), then the process 200 leads back to task 202 to obtain the most current data. If not, then the current state of the synthetic display is maintained. The relatively high refresh rate of the process 200 results in a relatively seamless and immediate updating of the display. Thus, the process 200 is iteratively repeated to update the graphical representation of the airport field and its features, possibly along with other graphical elements of the synthetic display. In practice, the process 200 can be repeated indefinitely and at any practical rate to support continuous and dynamic updating and refreshing of the display in real-time or virtually real-time. Frequent updating of the displays enables the flight crew to obtain and respond to the current operating situation in virtually real-time.

At any given moment in time, the dynamic synthetic display rendered on the flight deck display element will include a graphical representation of an airport field and graphical representations of taxiway signage, runway signage, or both (individually and collectively referred to here as taxiway/runway signage). An exemplary embodiment of the flight deck display system may render taxiway/runway signage using different techniques, technologies, and schemes, which are described in more detail below.

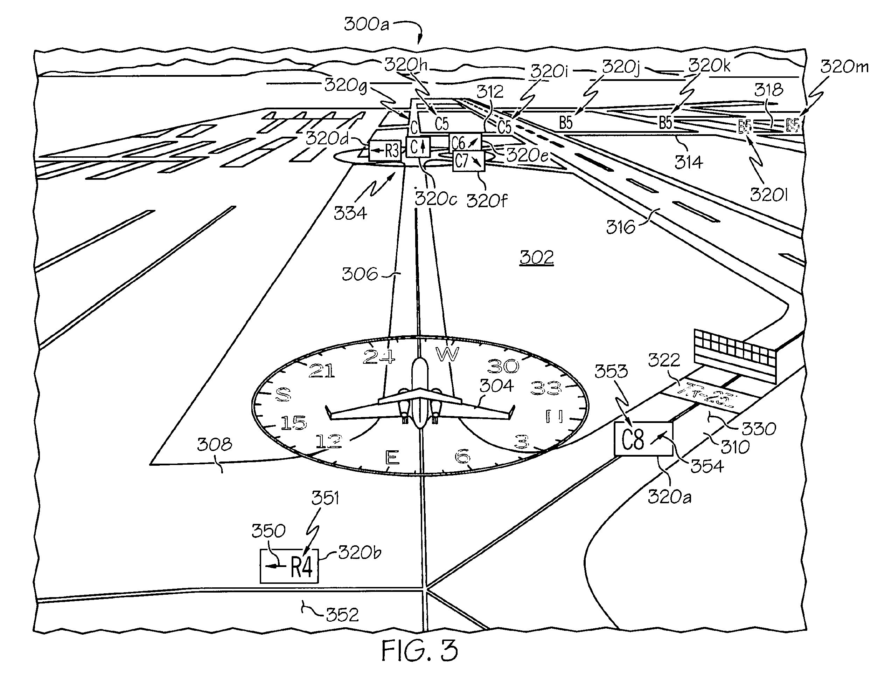

In certain embodiments, a dynamic synthetic display presented on a flight deck display element includes a graphical representation of at least one taxiway having an exposed taxiway surface, along with associated taxiway/runway signage that is rendered on the exposed taxiway surface. In this regard, FIG. 3 depicts a synthetic display 300a of an exemplary airport field 302 at a particular moment in time. The synthetic display 300a includes a graphical representation of the aircraft 304 located and headed in accordance with the true geographic position and heading of the actual aircraft. The synthetic display 300a also includes graphical representations of various features, structures, fixtures, and/or elements associated with the airport field 302. For example, the synthetic display 300a includes graphical representations of a first taxiway 306 (on which the aircraft currently resides), a second taxiway 308, a third taxiway 310, a fourth taxiway 312, a fifth taxiway 314, and other taxiways (shown without reference numbers). In certain embodiments, the graphical representations of the taxiways are conformally rendered in accordance with their real-world counterpart taxiways. For this example, the synthetic display 300a also includes graphical representations of a first runway 316 and a second runway 318. According to the description the synthetic display 300a also contains graphical representations of taxiway/runway signage. For this example, the synthetic display 300a includes graphical representations of taxiway signage 320 associated with at least some of the depicted taxiways, and runway signage 322 associated with at least some of the depicted runways.

As described above with reference to the flight deck display system 100, airport feature data accessed by the system 100 can be utilized to render additional graphical elements and shapes corresponding to features of the airport field 302. Indeed, any of the features listed above could be rendered with the synthetic display 300a. In this regard, the exemplary synthetic display 300a shown in FIG. 3 also includes, without limitation: runway markings; taxiway markings; a ramp area and related markings; parking guidance lines and parking stand lines; landscape features located at or near the airport field 302; terrain (e.g., mountains) located beyond the airport field 302; runway edges; runway shoulders; taxiway centerlines; taxiway edges or boundaries; taxiway shoulders; and airport terrain features. Of course, the various graphical features rendered at any given time with a synthetic display will vary depending upon the particular airport of interest, the current position and heading of the aircraft, the desired amount of graphical detail and/or resolution, etc.

In certain embodiments, the airport field 302 is rendered in a manner that appears conformal to the earth. In other words, the synthetic display 300 emulates a realistic view of the airport field 302 from the flight deck or cockpit perspective. Thus, as the aircraft changes position and/or heading, the synthetic display 300 will be updated to preserve the conformal appearance of the airport field 302. This effectively simulates the visual appearance that crew members would see looking out the front cockpit windows.

Conformal Signage Rendered Flat On The Taxiway

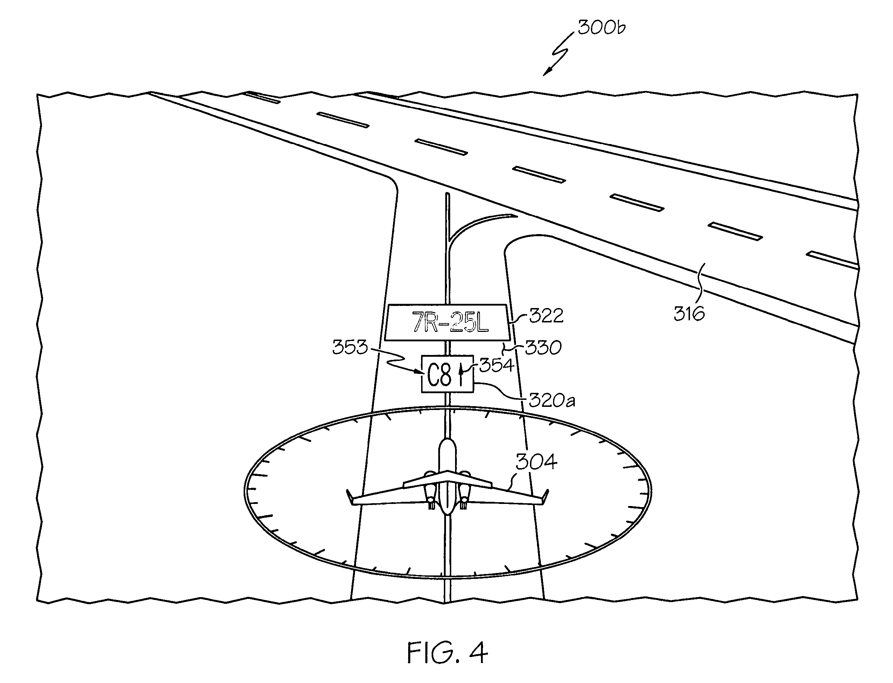

In certain embodiments, the synthetic display 300 includes taxiway/runway signage that is conformally rendered on a taxiway. For example, FIG. 3 shows the graphical representation of the runway signage 322 rendered on the exposed taxiway surface 330 of the third taxiway 310. The runway signage 322 is conformally rendered such that it appears in a stationary location relative to the third taxiway 310. In particular embodiments, the runway signage 322 is conformally rendered flat on the exposed taxiway surface 330, as depicted in FIG. 3. In this regard, the position and orientation of the runway signage 322 remains fixed relative to the orientation of the third taxiway 310, as though the runway signage 322 has been painted on the exposed taxiway surface 330. FIG. 4 also illustrates the conformal nature of the runway signage 322. In FIG. 4, the synthetic display 300b corresponds to a point in time when the aircraft is located on the third taxiway 310 and headed toward the first runway 316. In FIG. 4, the runway signage 322 appears in the same relative position as that shown in FIG. 3. Moreover, due to the conformal rendering, the runway signage 322 is now oriented with the heading of the aircraft 304.

The graphical representation of the runway signage 322 will typically include some type of identifier, label, or reference of an approaching runway that intersects a taxiway. For this example, the runway signage 322 includes the identifier "7R-25L" for the first runway 316. Notably, the runway signage 322 is conformally rendered on the third taxiway 310, which intersects or leads into the first runway 316. Thus, the viewer of the synthetic display 300 will see the runway signage 322 before the aircraft reaches the real-world runway that corresponds to the graphical representation of the first runway 316. FIG. 4 depicts how the runway signage 322 might be rendered while the aircraft is taxiing down the third taxiway 310 toward the first runway 316.

It should be appreciated that graphical representations of taxiway signage may also be conformally rendered on exposed taxiway surfaces, in a manner similar to that described above for the runway signage 322. Although the figures depict the taxiway signage 320 rendered as upstanding signboards on the respective taxiways, the taxiway signage 320 may alternatively (or additionally) be rendered flat on the exposed taxiway surfaces, as described above for the runway signage 322. Rendering the taxiway signage 320 as upstanding signboards or billboards may be desirable to better emulate their real-world counterparts, which are typically deployed as vertically oriented signs located to one or both sides of the respective taxiways. In certain embodiments, upstanding taxiway signage could be rendered in a stationary position on the respective taxiways while having a rotating or dynamically adjustable orientation (described in more detail below). In this regard, FIG. 4 illustrates how the taxiway signage 320a appears to have rotated (relative to its orientation shown in FIG. 3) while remaining substantially in a stationary location on the third taxiway 310.

The graphical representation of each taxiway sign 320 will typically include some type of identifier, label, or reference of a corresponding taxiway. The taxiway identifier may correspond to the taxiway on which the aircraft currently resides, a taxiway ahead of the current aircraft position, a taxiway behind the current aircraft position, an intersecting taxiway that intersects or meets the taxiway on which the aircraft currently resides, or the like. Referring to FIG. 3, the taxiway sign 320a includes the identifier "C8" for the third taxiway 310, the taxiway sign 320b includes the identifier "R4" for the second taxiway 308, the taxiway sign 320c includes the identifier "C" for the first taxiway 306, etc. The taxiway signage 320 may also include graphical representations of directional indicators (e.g., arrows) that further identify the respective taxiways, that correspond to the intended direction of travel for the aircraft on the respective taxiways, that indicate taxi maneuvers that have been cleared by air traffic control, or the like. These directional indicators are described in more detail below.

Proximity-Based Variable Rendering Of Signage

In particular embodiments, some visible and displayable features of the airport field 302 can be gradually introduced, incrementally rendered, faded in, and/or progressively displayed in an intelligent and intuitive manner that avoids display clutter and in a manner that makes the synthetic display 300 easier to read and interpret. In this regard, display characteristics and/or visually distinguishable traits of the taxiway/runway signage may be influenced by the actual physical proximity and/or the actual temporal proximity of the aircraft relative to one or more reference locations or features of the airport field. For example, display characteristics of the taxiway signage 320 could be influenced by the physical and/or temporal proximity of the aircraft relative to the real-world counterpart taxiways. Thus, taxiway/runway signage that is relatively far away from the aircraft can be displayed in a subtle and inconspicuous manner, while signage that is relatively close to the aircraft can be displayed in a more prominent and eye-catching manner. Moreover, the flight deck display system could be suitably configured such that signage is displayed only after the aircraft is within a certain distance or time range from the signage. This reduces clutter on the synthetic display 300 and enables the crew to concentrate on signage that is relevant to the operation of the aircraft.

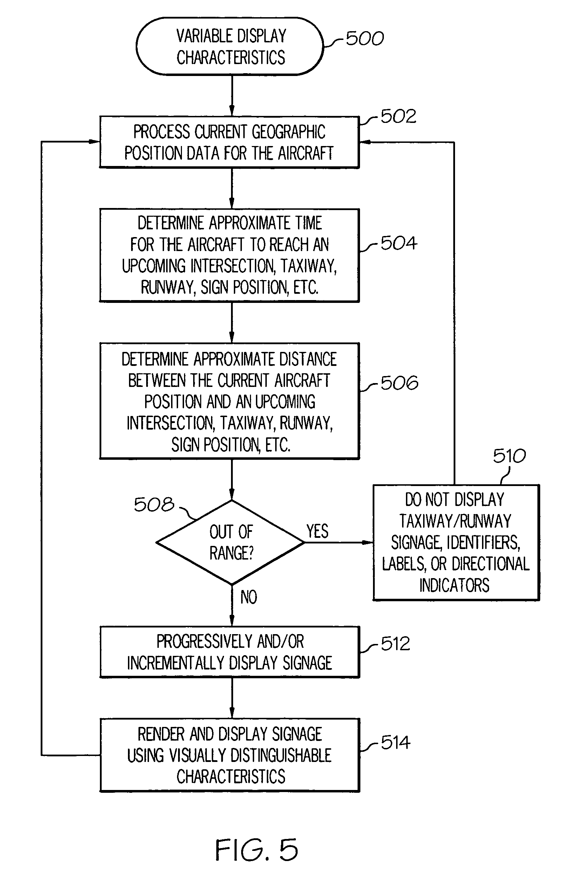

FIG. 5 is a flow chart that illustrates an exemplary embodiment of a variable display characteristics process 500, which may be performed by an embodiment of a flight deck display system. The various tasks performed in connection with the process 500 may be performed by software, hardware, firmware, or any combination thereof. For illustrative purposes, the following description of the process 500 may refer to elements mentioned above in connection with FIG. 1. In practice, portions of the process 500 may be performed by different elements of the described system, such as the processing architecture or the display element. It should be appreciated that the process 500 may include any number of additional or alternative tasks, the tasks shown in FIG. 5 need not be performer in the illustrated order, and the process 500 may be incorporated into a more comprehensive procedure or process having additional functionality not described in detail herein. In particular, the process 500 could be integrated with or cooperatively performed with the process 200 described previously.

In connection with the process 500, the flight deck display system analyzes and/or processes the current geographic position data (and, possibly, the current heading data) for the aircraft (task 502). In addition, the process 500 may determine, calculate, or estimate the approximate time required for the aircraft to reach a designated feature, landmark, marker point, or element associated with the airport field (task 504). For example, task 504 could determine the approximate time for the aircraft to reach an upcoming taxiway/runway intersection, a designated taxiway, a designated runway, a designated sign location, or the like. Notably, the determination made during task 504 will be influenced, based upon, or otherwise dependent upon the current geographic position data, the taxi speed of the aircraft, the acceleration/deceleration of the aircraft, and/or other aircraft status data such as the current heading data. In lieu of or in addition to task 504, the process 500 might determine, calculate, or estimate the approximate physical distance between the current aircraft position and a designated feature, landmark, marker point, or element associated with the airport field (task 506). For example, task 506 could determine the approximate distance between the aircraft and an upcoming taxiway/runway intersection, a designated taxiway, a designated runway, a designated sign location, or the like. Notably, the determination made during task 506 will be influenced, based upon, or otherwise dependent upon the current geographic position data (and, possibly, the current heading data) of the aircraft.

The process 500 may then check whether or not certain features of the airport field are "out of range" for purposes of synthetic display rendering (query task 508). For this example, a feature is considered to be out of range if the approximate distance and/or the approximate destination time to that feature (as determined by task 504 and/or task 506) is greater than a specified physical proximity threshold and/or a specified temporal proximity threshold. If query task 508 determines that a particular feature is out of range, then the process 500 will control the rendering of the synthetic display such that the out-of-range feature is not displayed. For this example, the signage, identifiers, labels, directional indicators, and other graphical elements associated with out-of-range taxiway/runway signage will not be displayed. In other words, the process 500 triggers the display of graphical representations of distant taxiway/runway signage (and related elements) when the signage is within range as determined by query task 508. Thus, taxiway signage associated with taxiways located well in the distance will not be rendered. However, the process 500 will trigger the display of taxiway signage associated with an upcoming taxiway intersection when the approximate time to reach that intersection is less than the temporal proximity threshold.

In practice, different physical proximity and temporal proximity thresholds can be used by the process 500 for different types, categories, or classes of features. For example, it may be desirable to use one proximity threshold for taxiway signage, and a different proximity threshold for runway signage. As another example, it may be desirable to use one proximity threshold for tactical signage, and a different proximity threshold for strategic signage.

Assuming that the features of interest are within range as defined by query task 508, the process 500 may progressively and/or incrementally display the graphical representations of taxiway/runway signage during taxiing of the aircraft, such that at least one visually distinguishable characteristic of the taxiway/runway signage varies as a function of the geographic position and heading data (task 512). Thus, at any point in time, the flight deck display system can render and display the taxiway/runway signage using different visually distinguishable characteristics (task 514) that indicate physical or temporal proximity to the aircraft and/or that are used to reduce clutter and provide a clean synthetic display. For instance, taxiway signs near to the current position of the aircraft might be rendered using a first set of visually distinguishable characteristics, while taxiway signs far from the current position of the aircraft might be rendered using a second set of visually distinguishable characteristics, where the different visually distinguishable characteristics vary as a function of the geographic position, heading, and possibly other aircraft status data. In this context, a visually distinguishable characteristic may be related to one or more of the following traits, without limitation: color; brightness; transparency level; translucency level; fill pattern; shape; size; flicker pattern; focus level; sharpness level; clarity level; shading; dimensionality (2D or 3D); resolution; and outline pattern. These visually distinguishable characteristics can be used to fade or introduce the taxiway/runway signage into the synthetic display in a gradual manner. For example, a taxiway sign could gradually fade in from being fully transparent to being fully opaque or solid as the aircraft approaches that taxiway sign.

Referring to FIG. 3, the progressive/incremental display of the taxiway signage 320 is schematically illustrated. At the depicted point in time, the synthetic display 300a includes "normal" rendering of the taxiway signage 320a, 320b, 320c, 320d, 320e, and 320f. In this regard, each of these taxiway signs is rendered as a rectangular and vertically oriented upstanding board, with legible and solid block letters inside of the rectangular border. In contrast, the synthetic display 300a renders the relatively distant taxiway signage 320g, 320h, 320i, 320j, 320k, 3201, and 320m using a different and visually distinguishable scheme. More particularly, these distant taxiway signs are rendered without any rectangular border, such that only the taxiway identifiers are visible (i.e., C, C5, and B5). Moreover, these distant taxiway signs are rendered using a different color (e.g., white, partially transparent, or translucent) that is less noticeable than the color scheme used for the normal taxiway signs. Indeed, the taxiway signage 3201 and 320m, both of which are relatively far away from the aircraft 304, are rendered in a way that makes them even less noticeable. In practice, the taxiway signage 3201 and 320m could be displayed using very faint outlines, using almost fully transparent lettering, or the like. As the aircraft approaches these distant taxiway signs, the respective taxiway signage 320 can be rendered in a progressively more noticeable manner, eventually being rendered in the nominal manner depicted for the taxiway signage 320a, 320b, 320c, 320d, 320e, and 320f.

In connection with the process 500, the flight deck system performing the method according to the present invention also use different rendering schemes and/or different visually distinguishable characteristics to display tactical taxiway signage differently than strategic taxiway signage. As used here, a "tactical" sign is one that is associated with an approaching decision point for the flight crew, e.g., an upcoming intersection, junction, turning point, or the like. In contrast, a "strategic" sign is one that is not associated with an approaching decision point for the flight crew. Typically, tactical signs are those related to the next decision point, although tactical signs could be related to two or more upcoming decision points, and/or related to one or more past decision points. In practice, the dynamic synthetic display 300 can be generated such that graphical representations of tactical taxiway signage are rendered with first visually distinguishable characteristics, while the graphical representations of strategic taxiway signage are rendered with second visually distinguishable characteristics that are different than the first visually distinguishable characteristics. Referring again to FIG. 3, the taxiway signage 320c, 320d, 320e, and 320f may be considered to be tactical signage because they represent the next approaching intersection for the aircraft 304. In contrast, the taxiway signage 320g, 320h, 320i, 320j, 320k, 3201, and 320m may be considered to be strategic signage. Accordingly, the tactical signage is rendered using one graphical scheme (more noticeable and conspicuous), while the strategic signage is rendered using a different graphical scheme (less noticeable). A number of possible visually distinguishable characteristics of this taxiway signage 320 were described in detail above.

In certain embodiments, the rendered position of taxiway/runway signage may also be influenced by the tactical/strategic classification. For example, tactical taxiway signage may be rendered at or near the respective intersection of taxiways. As depicted in FIG. 3, the tactical taxiway signage 320c, 320d, 320e, and 320f are displayed in a clustered area near the intersection 334. In practice, the flight deck display system may be suitably configured to render tactical taxiway signage such that they form a circle (or other predefined shape) pattern having a designated radius, diameter, or circumference, and such that the circle is centered at or near the center of the intersection 334. Notably, the synthetic display 300a does not include any tactical signage beyond the centralized cluster near the intersection 334. In contrast, the graphical representations of the strategic taxiway signage may be rendered on or near their corresponding taxiways and in a manner that is not constrained by the presence or location of intersections, junctions, etc. For example, FIG. 3 depicts how the strategic taxiway signage 320j, 320k, 3201, and 320m (which identifies the taxiway labeled "B5") is rendered on and along the taxiway itself. In other words, this strategic taxiway signage need not be clustered around an intersection, junction, or other reference location in the airport field 302.

Taxi Maneuver Indicators

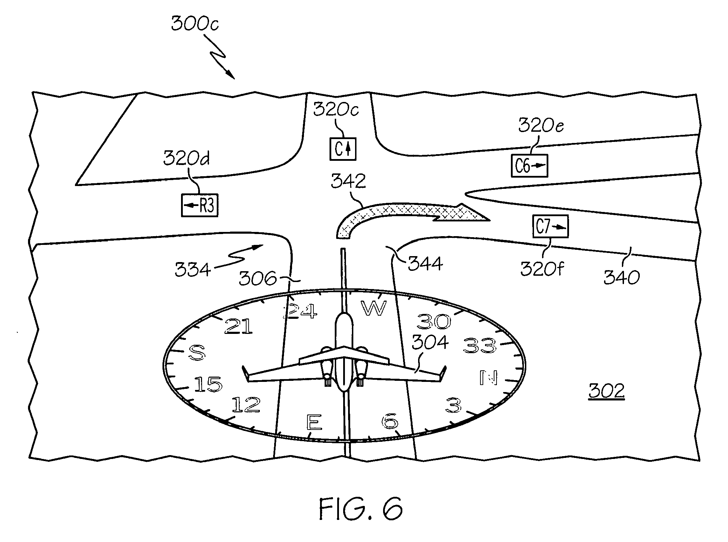

Certain exemplary embodiments of the flight deck display system can be suitably configured to render taxi maneuver indicators as needed to provide taxiing instructions or guidance to the crew. In this regard, FIG. 6 is a schematic depiction of the synthetic display 300c at a point in time when the actual position of the aircraft is near the intersection 334 (and heading directly toward the intersection 334, generally aligned with the longitudinal direction of the first taxiway 306). This example assumes that the desired taxi route for the aircraft continues down the first taxiway 306 and then turns right onto the taxiway 340 (identified by the taxiway signage 320f). As depicted in FIG. 6, the synthetic display 300c at this point in time includes a taxi maneuver indicator 342 that is conformally rendered on the graphical representation of the exposed taxiway surface 344. In this regard, the taxi maneuver indicator 342 is rendered with "painted-on" characteristics, as described above for the runway signage 322 (see FIG. 3). In contrast, at the time depicted in FIG. 3, the taxi maneuver indicator 342 is not rendered.

Rendering of taxi maneuver indicators may be initiated by any number of triggering events. For example, taxi maneuver indicators might be triggered based on physical or temporal proximity of the aircraft to the maneuvering point (similar to that described above with reference to the process 500). In certain implementations, taxi maneuver indicators are rendered in response to approval or clearance obtained by an air traffic controller and/or an air traffic control system. For example, the flight deck display system 100 may be responsive to electronic messages received by the ATC datalink subsystem 113 (see FIG. 1). Accordingly, when the system 100 receives a message that conveys or otherwise indicates air traffic control clearance or approval to execute a taxi maneuver, the synthetic display can be updated to render an appropriate taxi maneuver indicator.

In practice, a taxi maneuver indicator could be rendered as an arrow, a stop sign icon, a pointer, flashing lights, warning flags, an animated route tracer, a text field, or the like. Moreover, the particular format, shape, and visual characteristics of a taxi maneuver indicator might vary, depending upon the actual maneuver to be executed. In this regard, an aircraft maneuver associated with a taxi maneuver indicator may be, without limitation: proceed straight ahead; turn left onto a designated taxiway; turn right onto a designated taxiway; stop and hold; departing/arriving; from/at; origin/destination; or the like. A taxi maneuver indicator could also include text or other information related to cardinal directions, for example, "North on C8." It should be appreciated that equivalent maneuver indicators could be utilized for paths or areas other than taxiways per se (e.g., runways, ramp areas, etc.).

Dynamic Directional Indicators Rendered With Signage

Particular embodiments of the flight deck display system can be suitably configured to generate and render graphical representations of directional indicators associated with rendered taxiway/runway signage. A directional indicator for a given taxiway/runway sign corresponds to the intended direction of travel for the aircraft on the respective taxiway/runway. The synthetic display 300a depicted in FIG. 3 includes such directional indicators (realized as arrows in this example) rendered with the taxiway signage 320. Although not depicted in FIG. 3, the runway signage 322 may also include a corresponding directional indicator if so desired. Instead of simple arrows, the directional indicators may be configured as any directional icon, element, or feature, such as a pointer, a flag, flashing lights, an animated feature, or the like.

The taxiway sign 320b includes a directional indicator 350 that points to the left in this example. The taxiway sign 320b also includes an identifier 351 of the second taxiway 308 (namely, the label "R4"). For this embodiment, the directional indicator 350 is rendered on the graphical representation of the taxiway sign 320b itself. Alternatively (or additionally), the directional indicator 350 could be rendered on the graphical representation of the exposed taxiway surface 352 near the taxiway sign 320b. Notably, the directional indicator 350 visually indicates the intended, desired, or possible direction in which the aircraft can travel along the second taxiway 308. Similarly, the taxiway sign 320a includes a taxiway identifier 353 (the label "C8") and a directional indicator 354 that points in a direction that approximately follows the orientation of the third taxiway 310.

According to the invention the directional indicators for the taxiway/runway signage are dynamic in nature. More specifically, the orientation and/or heading of each directional indicator changes as a function of the geographic position and heading data of the aircraft. For example, the directional indicators could rotate on the graphical representations of the taxiway/runway signage (or rotate on the ground under or near the taxiway/runway signage) as a function of the geographic position and heading data. FIG. 3 and FIG. 4 illustrate this dynamic characteristic for the directional indicator 354 rendered with the taxiway sign 320a. In FIG. 3, the directional indicator 354 is oriented at about 45 degrees relative to a horizontal reference line. In FIG. 4, however, the directional indicator 354 is oriented at about 90 degrees relative to the same horizontal reference line. Thus, the directional indicator 354 appears to have rotated on the taxiway sign 320a. This rotation of the directional indicator 354 follows the change in position and/or heading of the aircraft.

Persistent Forward Facing Signage

Certain embodiments of the flight deck display system can be suitably configured to generate and render graphical representations of upstanding signboards (which may be used as taxiway signage and/or runway signage) in a dynamic manner. More specifically, the orientation and/or perspective of each upstanding signboard changes as a function of the geographic position and heading data of the aircraft. In preferred implementations, upstanding signboards are dynamically rendered such that they always face forward in the dynamic synthetic display. Consequently, the upstanding signboards will appear to rotate on the graphical representation of the taxiway/runway so that they are always facing forward on the flight deck display element. The use of an always-forward-facing orientation or perspective increases the readability of the taxiway/runway signage and makes it easier for the flight crew to quickly interpret the content (e.g., the taxiway/runway identifiers, directional indicators, etc.) and meaning of the taxiway/runway signage.

FIG. 3 and FIG. 4 illustrate this dynamic forward-facing property of the taxiway sign 320a. In FIG. 3, the taxiway sign 320a faces the viewer, i.e., the front surface plane of the taxiway sign 320a is rendered as a rectangle. Thus, the taxiway sign 320a is rendered as though it is physically oriented in the optimal viewing position for the flight crew. In FIG. 4, the taxiway sign 320a still faces the viewer, even though the position and heading of the aircraft 304 has changed. As shown in FIG. 4, the front surface plane of the taxiway sign 320a is still rendered as a rectangle. Thus, the taxiway sign 320a is displayed as though it has been rotated about a vertical axis from its position displayed in FIG. 3. Accordingly, the taxiway sign 320a remains in a forward-facing orientation, which represents the optimal viewing position for the flight crew. This perceived rotation of the taxiway sign 320a follows the change in position and/or heading of the aircraft.

While at least one exemplary embodiment has been presented in the foregoing detailed description, it should be appreciated that a vast number of variations exist. It should also be appreciated that the exemplary embodiment or embodiments described herein are not intended to limit the scope, applicability, or configuration of the claimed subject matter in any way. Rather, the foregoing detailed description will provide those skilled in the art with a convenient road map for implementing the described embodiment or embodiments. It should be understood that various changes can be made in the function and arrangement of elements without departing from the scope defined by the claims, which includes known equivalents and foreseeable equivalents at the time of filing this patent application.

## Claims

1. A method (200) of displaying airport field features on a flight deck display element of an aircraft, the method comprising:
obtaining (202) geographic position data and heading data for the aircraft;
accessing (206) airport feature data associated with synthetic graphical representations of an airport field (302); and
rendering (210) a dynamic synthetic display (300) of the airport field (302) on the flight deck display element, the dynamic synthetic display (300) being rendered in accordance with the geographic position data, the heading data, and the airport feature data;
wherein the dynamic synthetic display (300) comprises graphical representations of:
a plurality of taxiways (306, 308, 310, 312, 314) each including at least one graphical taxiway identifier (320g-m, 351, 353);
**characterised in that** if the at least one graphical taxiway identifier (320g-m, 351, 353) is associated with an approaching flight crew decision point it is rendered on a respective taxiway sign (320a-f) rendered on the respective taxiway (306, 308, 310, 312, 314), each of said respective taxiway signs (320a-f) includes a graphical representation of a dynamic directional indicator (350, 354) rendered thereon, the dynamic directional indicator (350, 354) corresponding to an intended direction of travel for the aircraft on the respective taxiway (306, 308, 310, 312, 314), wherein the orientation of each dynamic directional indicator (350, 354) dynamically changes in real-time as a function of the geographic position and heading data.

2. The method (200) of claim 1, wherein each graphical representation of the dynamic directional indicator (350, 354) rotates on its respective taxiway sign (320a-f)as a function of the geographic position and heading data.

3. The method (200) of claim 1, wherein the graphical representation of the taxiway sign (320, 322) is conformally rendered as an upstanding signboard in a stationary location relative to the taxiway (306, 308, 310, 312, 314).

4. A flight deck display system of an aircraft configured to perform the method of any one of claims 1, 2 or 3.

## Patentansprüche

1. Verfahren (200) zum Anzeigen von Flughafenfeldmerkmalen auf einem Flugdeckanzeigeelement eines Flugzeugs, wobei das Verfahren Folgendes umfasst:
Erhalten (202) von geografischen Positionsdaten und Kursdaten für das Flugzeug;
Zugreifen (206) auf Flughafenmerkmaldaten, die synthetischen grafischen Darstellungen eines Flughafenfelds (302) zugeordnet sind; und
Wiedergeben (210) einer dynamischen synthetischen Anzeige (300) des Flughafenfelds (302) auf dem Flugdeckanzeigeelement, wobei die dynamische synthetische Anzeige (300) gemäß den geografischen Positionsdaten, den Kursdaten und den Flughafenmerkmalsdaten wiedergegeben wird;
wobei die dynamische synthetische Anzeige (300) grafische Darstellungen von Folgendem umfasst:
mehrere Rollbahnen (306, 308, 310, 312, 314), die jeweils mindestens eine grafische Rollbahnkennung (320g-m, 351, 353) umfassen;
**dadurch gekennzeichnet, dass**, wenn die mindestens eine grafische Rollbahnkennung (320g-m, 351, 353) einem sich nähernden Flugcrew-Entscheidungspunkt zugeordnet ist, sie auf einem jeweiligen Rollbahnschild (320a-f) wiedergegeben wird, das auf der jeweiligen Rollbahn (306, 308, 310, 312, 314) wiedergegeben wird, wobei jedes der jeweiligen Rollbahnschilder (320a-f) eine grafische Darstellung eines darauf wiedergegebenen dynamischen Richtungsindikators (350, 354) umfasst, wobei der dynamische Richtungsindikator (350, 354) einer beabsichtigten Kursrichtung für das Flugzeug auf der jeweiligen Rollbahn (306, 308, 310, 312, 314) entspricht, wobei sich die Orientierung jedes dynamischen Richtungsindikators (350, 354) dynamisch in Echtzeit als Funktion der geografischen Positions- und Kursdaten ändert.

2. Verfahren (200) nach Anspruch 1, wobei sich jede grafische Darstellung des dynamischen Richtungsindikators (350, 354) auf ihrem jeweiligen Rollbahnschild (320a-f) als Funktion der geografischen Positions- und Kursdaten dreht.

3. Verfahren (200) nach Anspruch 1, wobei die grafische Darstellung des Rollbahnschilds (320, 322) konform als aufrechtstehendes Hinweisschild an einem relativ zu der Rollbahn (306, 308, 310, 312, 314) stationären Ort wiedergegeben wird.

4. Flugdeckanzeigesystem eines Flugzeugs, das dafür ausgelegt ist, das Verfahren nach einem der Ansprüche 1, 2 oder 3 auszuführen.

## Revendications

1. Procédé (200) d'affichage des caractéristiques du terrain d'un aéroport sur un élément d'affichage du poste de pilotage d'un aéronef, le procédé comprenant les étapes suivantes :
obtenir (202) des données de position géographique et des données de cap de l'aéronef ;
accéder (206) aux données de caractéristiques de l'aéroport associées aux représentations graphiques synthétiques du terrain d'un aéroport (302) ; et
rendre (210) un affichage synthétique dynamique (300) du terrain de l'aéroport (302) sur l'élément d'affichage du poste de pilotage, l'affichage synthétique dynamique (300) étant rendu en fonction des données de position géographique, des données de cap et des données de caractéristiques de l'aéroport ;
où l'affichage synthétique dynamique (300) comprend des représentations géographique :
d'une pluralité de pistes de roulement (306, 308, 310, 312, 314) comprenant chacune au moins un identificateur graphique de piste de roulement (320g-m, 351, 353) ;
**caractérisé en ce que**, si l'au moins un identificateur graphique de piste de roulement (320g-m, 351, 353) est associé à un point de décision de l'équipage du vol en approche, il est rendu sur un signe respectif de piste de roulement (320a-f) rendu sur la piste de roulement (306, 308, 310, 312, 314) respective, chacun desdits signes respectifs de piste de roulement (320a-f) comprend une représentation graphique d'un indicateur directionnel dynamique (350, 354) rendue dessus, l'indicateur directionnel dynamique (350, 354) correspondant à une direction souhaitée de déplacement de l'aéronef sur la piste de roulement (306, 308, 310, 312, 314) respective, où l'orientation de chaque indicateur directionnel dynamique (350, 354) change de manière dynamique en temps réel en fonction des données de position géographique et des données de cap.

2. Procédé (200) selon la revendication 1, dans lequel chaque représentation graphique de l'indicateur directionnel dynamique (350, 354) tourne avec son signe respectif de piste de roulement (320a-f) en fonction des données de position géographique et des données de cap.

3. Procédé (200) selon la revendication 1, dans lequel la représentation graphique du signe de piste de roulement (320, 322) est rendue de manière conforme sous la forme d'une signalisation droite à un emplacement fixe par rapport à la piste de roulement (306, 308, 310, 312, 314).

4. Système d'affichage de poste de pilotage d'un aéronef configuré pour exécuter le procédé selon l'une quelconque des revendications 1, 2 ou 3.
